# EUROPEAN PATENT APPLICATION

(11) **EP 1 883 044 A1**
(43) Date of publication of application: **30.01.2008**
(21) Application number: 06745436.3
(22) Date of filing: 19.04.2006
(51) Int. Cl.: G06T 1/00

(54) **ELECTRONIC TICKET TRANSFER SYSTEM AND ELECTRONIC TICKET TRANSFER METHOD**

(30) Priority: 16.05.2005 JP 2005142225
(71) Applicant: Sharp Kabushiki Kaisha, Osaka-shi, Osaka 545-8522 (JP)
(72) Inventor: YAMADA, Takanori, Rapport Kamatori 209, Chiba-shi Chiba 266-0011 (JP)
(74) Representative: Müller, Frithjof E.
(86) International application number: PCT/JP2006/308204
(87) International publication number: WO 2006/123501

(57) **Abstract**

An electronic-ticket transfer system includes a first portable terminal 11 and a second portable terminal 12, a ticket transfer management system 13, and a communication network 14. The first portable terminal 11 has an electronic ticket 15. The first portable terminal 11 and the second portable terminal 12 have the function of accessing the ticket transfer management system 13 via the communication network 14. The ticket transfer management system 13 acts as a device that mediates transfer of the electronic ticket 15 between the portable terminal 11 and the portable terminal 12. The ticket transfer management system 13 includes a transfer information registration management system 131, a ticket management system 132, and a settlement system 133. The electronic ticket 15 is a piece of digitized information capable of an exchange by correspondence and is coded information such as one- or two-dimensional barcode, containing proof of some right being held. Thereby, an electronic-ticket acquirer can receive the ticket immediately after a settlement.

## Description

### TECHNICAL FIELD

The present invention relates to an electronic-ticket transfer system and an electronic-ticket transfer method and more particularly to a system and an electronic-ticket transfer method by which an electronic-ticket provider transfers an electronic ticket stored in his or her portable terminal to an acquirer who uses another portable terminal.

### BACKGROUND ART

To transfer a tangible ticket printed on paper or the like, one who seeks the transfer has heretofore took such ways as to make direct contact with his or her friends and others for the transfer, as to use a bulletin board or netnews on the Web to find a ticket provider or acquirer, as to sell the ticket to a ticket shop, or the like.

Because of a limited number of contactable friends and others, however, the ticket provider is unlikely to transfer his or her ticket to them. The use of the bulletin board or netnews requires time for delivery of the ticket, payment of the money for it, and so on although there are a substantially greater number of ticket providers or acquirers.

Moreover, although there are people who go to the site of an event to get the day tickets of the event for a highly popular sport or concert or the like, they often fail to acquire the tickets after their being sold out. Accordingly, those who are looking for somebody who transfers the tickets to them are often seen around the site. Furthermore, there is a great demand for tickets sold in advance, since those who acquire advance tickets are often treated better than those who acquire day tickets (e.g., category S seats, etc.) and because in particular immediately before the performances start, the advance tickets are more likely to be available at low price. Although such a situation increases the likelihood of making transfer possible, ticket transfer is rarely concluded, because those who seek to transfer their tickets and who cannot take part in an event cannot often go to the site.

Japanese Patent literature 1 discloses that a ticket trader and a ticket broker mediate a ticket transfer transaction between a ticket provider and a ticket acquirer. The ticket trader has the function of managing supply and demand for ticket transfer, and the ticket broker mediates an actual ticket transfer, which specifically means the receipt of a ticket from the provider, the issue of the ticket to the acquirer, the receipt of payment of the money for the ticket from the acquirer, and the payment of the money for the ticket to the provider. Since the broker has a ticket issuing function, speedy ticket transfer is possible even if the provider and the acquirer are located remote from each other.

However, a ticket is not necessarily transferred to the acquirer immediately after the ticket transfer contract has been concluded, because of the constraint that the ticket broker can issue the new ticket to the acquirer only after the provider has transferred the ticket to the ticket broker, the constraint that the provider and the acquirer have to go to a ticket broker's window, and others.

Japanese Patent literature 2 discloses that efficient ticket transfer is achieved by using position information to extract a person who can arrive at the site before the performance starts, from those who are registered in a waiting list for cancellation of a ticket and who seek to acquire the electronic ticket, and then transmitting transfer recommend information to the extracted person.

For electronic-ticket transfer, a communication line can be used to acquire and transfer tickets and also to deliver tickets to friends and acquaintances at remote sites. For transfers between individuals, it is essential to prevent fraud. As disclosed for example in patent literature 3, an electronic ticket is defined so that the terms of transfer and the owner ID can be attached to the electronic ticket, and this enables achieving security transfer and hence preventing fraud.
Patent Literature 1: Japanese Patent Application Laid-open Publication No. 2003-346012
Patent Literature 2: Japanese Patent Application Laid-open Publication No. 2002-279113
Patent Literature 3: Japanese Patent Application Laid-open Publication No. 2000-123095

### DISCLOSURE OF THE INVENTION

### Problems to be Solved by the Invention

The above method disclosed in patent literature 3 is applicable to electronic-ticket transfer, but ticket transfer does not necessarily occur immediately after a transfer contract has been concluded. Due to this, a situation can possibly arise where a provider cannot perform a transfer process and hence cannot transfer a ticket, in an instance where the ticket is required immediately since the contract for transfer is concluded on the very day of the ticket being used, and so on.

It is convenient to provide some method enabling a transfer-related procedure for potential acquirers who are thought to possibly seek to acquire a ticket even if they has not made no particular procedure for register in a waiting list for cancellation or the like.

An object of the present invention is to provide a means for enabling electronic-ticket transfer immediately after the electronic-ticket transfer contract has been concluded. An object of the present invention is to provide a method for proactively transmitting information to potential acquirers who are relatively likely to seek to acquire an electronic ticket even if they has not performed no particular procedure for register in a waiting list for cancellation or the like.

### Means for Solving Problems

A provider who provides an electronic ticket transfers the ticket to an acquirer who needs the electronic ticket via a ticket transfer management system. The provider and the acquirer each possess a portable terminal accessible to the ticket transfer management system. The electronic ticket to be provided is stored in a storage unit of the portable terminal of the provider.

At the same time that the ticket provider registers the terms of ticket transfer in the ticket transfer management system, the ticket provider deposits the electronic ticket to be actually transferred in a ticket management system of the ticket transfer management system. Thereby, the ticket can be delivered immediately after a settlement process has been completed by the acquirer.

Moreover, the portable terminal for electronic-ticket transfer has a function of acquiring its position information, and a function of registering the position information in the ticket transfer management system. The ticket transfer management system proactively distributes information, according to the acquired position information. The position information of a portable terminal is used as a means for determining whether a registered user can take part in an event, even if he or she has performed no particular procedure for register in a waiting list for cancellation or the like. Thereby, information on ticket transfer can be transmitted to a person who is likely to use the ticket, that is, a person who is present in the vicinity of the site. Moreover, efficient ticket transfer becomes possible.

### Advantageous Effect of the Invention

As described above, the present invention has the advantage that the ticket acquirer can receive the ticket immediately after the settlement because the electronic-ticket provider can deposit the electronic ticket to be transferred in the ticket transfer management system. Moreover, the present invention has the advantage that proactive demand stimulation and efficient transfers are achieved by using the position information of the portable terminal for providing the transfer information.

### BRIEF DESCRIPTION OF THE DRAWINGS

Fig. 1 is a functional block diagram showing an example of the configuration of an electronic-ticket transfer system according to a first embodiment of the present invention.
Fig. 2 is a flowchart showing the flow of a process to transfer a ticket using the electronic-ticket transfer system according to the first embodiment of the present invention.
Fig. 3 is a functional block diagram showing an example of the configuration of an electronic-ticket transfer system according to a second embodiment of the present invention.
Fig. 4 is a flowchart showing the flow of a process to transfer a ticket using the electronic-ticket transfer system according to the second embodiment of the present invention.

### EXPLANATION OF REFERENCE NUMERALS

11 ... portable terminal, 12 ... portable terminal, 13 ... ticket transfer management system, 131 ... transfer information registration management system, 132 ... ticket management system, 133 ... settlement system, 14 ... communication network, 15 ... electronic ticket, 31 ... portable terminal, 311 ... position information acquisition unit, 32 ... portable terminal, 321 ... position information acquisition unit, 33 ... ticket transfer management system, 331 ... transfer information registration management system, 332 ... ticket management system, 333 ... settlement system, 334 ... position information management system, 34 ... communication network, 35 ... electronic ticket

### BEST MODE FOR CARRYING OUT THE INVENTION

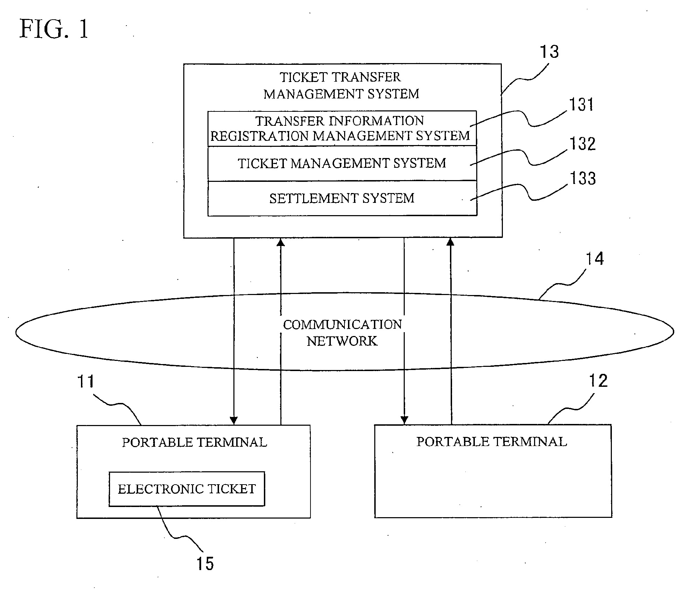

Description will be given below with reference to the drawings with regard to electronic-ticket transfer systems according to embodiments of the present invention. Fig. 1 is a functional block diagram showing an example of the configuration of the electronic-ticket transfer system according to the embodiment of the present invention. As shown in Fig. 1, the electronic-ticket transfer system according to the embodiment includes a first portable terminal 11 and a second portable terminal 12, a ticket transfer management system 13, and a communication network 14. Discussion is herein made with regard to an instance where the first portable terminal 11 has an electronic ticket 15.

The first portable terminal 11 and the second portable terminal 12 have the function of accessing the ticket transfer management system 13 via the communication network 14. For example, the portable terminals 11 and 12 are each a device such as a mobile telephone or a notebook personal computer (PC). The portable terminals 11 and 12 each refer to the device internally having a storage unit capable of storing an electronic ticket, or the device on which a storage unit (or a storage medium) is installable via an external interface.

The ticket transfer management system 13 according to the embodiment acts as a device that mediates a transfer transaction of the electronic ticket 15 between the ticket provider's portable terminal 11 (hereinafter referred to simply as a "first terminal") and the portable terminal 12 of a person who seeks to acquire the ticket (hereinafter referred to simply as a "second terminal"). The ticket transfer management system 13 includes a transfer information registration management system 131, a ticket management system 132, and a settlement system 133. The ticket transfer management system 13 is connected to the communication network 14 and is accessible anywhere at any time from the first portable terminal 11 and the second portable terminal 12. The communication network 14 acts as a channel of communications between the first portable terminal 11 and second portable terminal 12 and the ticket transfer management system 13 and is configured of a wire or wireless IP (Internet Protocol) network or the like.

The electronic ticket 15 is a piece of digitized information capable of exchange by correspondence. Examples of the electronic ticket 15 include a gift certificate, a prepaid card, a coupon, and a point on a point card, as well as general tickets such as a movie theater ticket and a train ticket. The electronic ticket 15 is not particularly limited to the examples listed above, but only needs to be digitizable and treatable in the same manner as an ordinary ticket. For example, the electronic ticket 15 refers to what is actually available for some service. The piece of digitized information is coded information, such as barcode, containing proof of some right being held, for example digital-data information obtained by recognizing and reading one- or two-dimensional barcode.

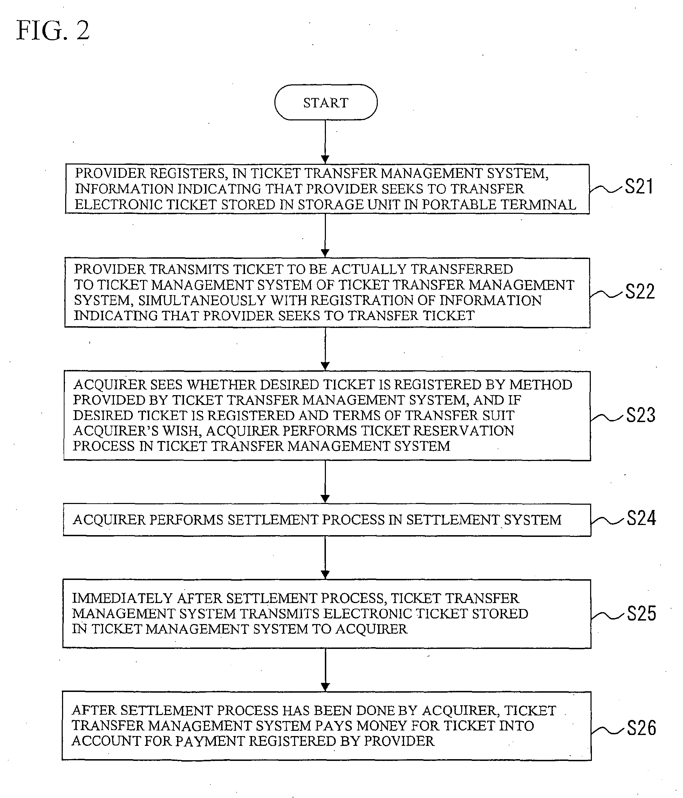

Fig. 2 is a flowchart showing the flow of a process to transfer a ticket using the electronic-ticket transfer system according to the embodiment. Description will be given referring also to Fig. 1. In the embodiment, the provider who operates the first portable terminal 11 sells the electronic ticket 15, and the electronic ticket 15 to be transferred is stored in the readable/writable storage unit of the first portable terminal 11, as shown in Fig. 1.

When the process is started, first at step S21 the provider who is going to transfer the electronic ticket 15 accesses the ticket transfer management system 13 from the first portable terminal 11 to register information indicating that he or she seeks to transfer the ticket in the transfer information registration management system 131. The information to be registered contains information on the type and contents of the ticket to be transferred and others, his or her suggested price of the ticket to be transferred, information on his or her account into which the money for the ticket is to be paid, and the deadline to conclude the transfer contract.

At step S22, the ticket provider transmits the electronic ticket 15 to be actually transferred from the first portable terminal 11 to the ticket management system 132 of the ticket transfer management system 13. The transmitted electronic ticket 15 is stored in a storage unit in the ticket management system 132. After transmission of the electronic ticket, the electronic ticket 15 in the first portable terminal 11 is automatically erased or invoked.

At step S23, the person who seeks to acquire the ticket accesses the ticket transfer management system 13 from the second portable terminal 12 to see whether or not his or her desired electronic ticket is registered in the transfer information registration management system 131. If the desired electronic ticket 15 is registered and the person who seeks to acquire the ticket agrees with the ticket provider on the terms of transfer, the person who seeks to acquire the ticket performs a ticket acquisition reservation process in the ticket transfer management system 13.

After completion of the ticket acquisition reservation process at step S23, at step S24 the ticket provider performs a settlement process for the transaction of the electronic ticket in the settlement system 133.

After completion of the settlement process at step S24, at step S25 the ticket transfer management system 13 transmits to the second portable terminal 12 the electronic ticket stored in the ticket management system 132. The second portable terminal 12 stores the received electronic ticket 15 in its own storage unit.

After the settlement process has been done by the person who has sought to acquire the ticket and actually received the electronic ticket, at step S26 the person pays the money for the ticket, directly or via the ticket transfer management system 13, into the account for payment registered by the ticket provider. Alternatively, electronic money can be used for payment.

If the transfer contract is not concluded even after the deadline, the ticket management system 132 sends the electronic ticket 15 back to the first portable terminal 11. If the reservation is canceled before the transfer contract is concluded, the ticket provider requests the return of the electronic ticket to thereby receive the electronic ticket 15 deposited in the ticket management system 132.

In the embodiment, as described above, the ticket acquirer can receive the ticket immediately after the settlement, since the electronic-ticket provider can deposit the electronic-ticket to be transferred in the ticket transfer management system.

Incidentally, the ticket management system 132 may receive payment of a brokerage fee for the transaction of the electronic ticket from the first portable terminal 11 or the second portable terminal 12, or may employ a registration system and receive advance payment of a registration fee.

Thus, the present invention has the advantage that the ticket acquirer can receive the ticket immediately after the settlement because the electronic-ticket provider can deposit the electronic ticket to be transferred in the ticket transfer management system. Incidentally, the present invention may be also used as a program to be run on a computer to execute the steps of Fig. 2 mentioned above.

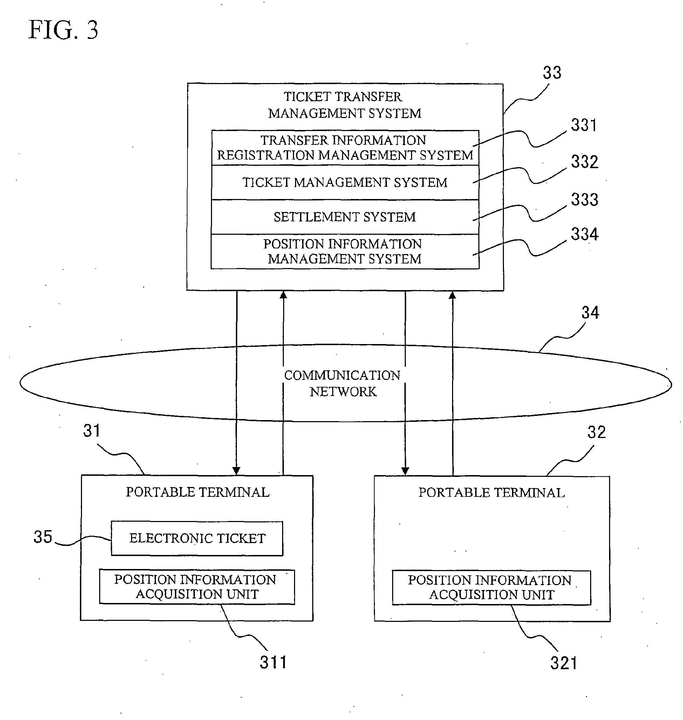

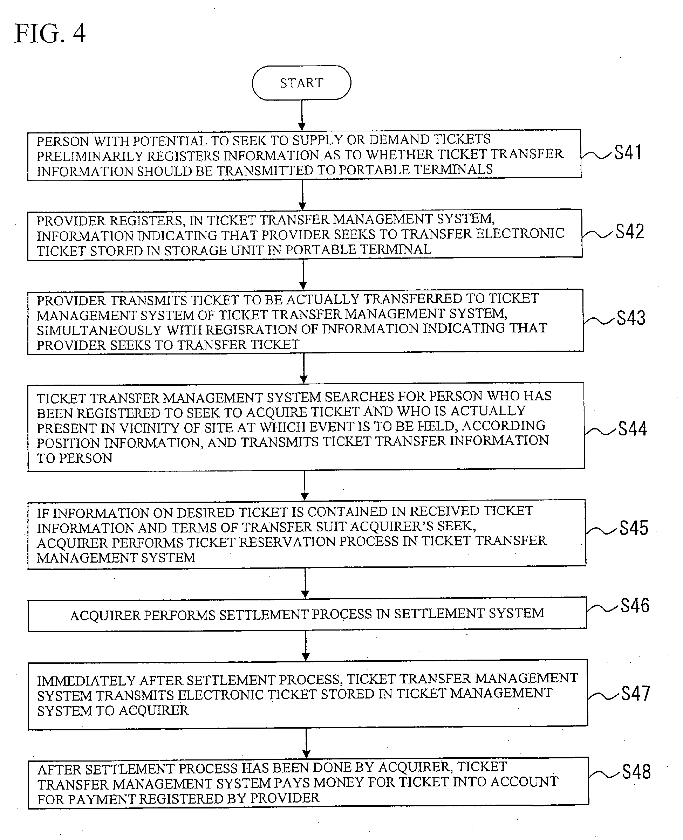

Description will now be given with reference to the drawings with regard to an electronic-ticket transfer system according to a second embodiment of the present invention. The system according to the second embodiment is one for transferring a ticket using position information of a portable terminal just before the deadline for the use of the ticket, for example on the day of the event requiring the electronic ticket, or the like. Description will be given below for the details of the system with reference to Figs. 3 and 4.

Fig. 3 is a functional block diagram showing an example of the configuration of the electronic-ticket transfer system according to the second embodiment. Besides having the configuration corresponding to that shown in Fig. 1, the system according to the second embodiment includes a position information acquisition unit 311 and a position information acquisition unit 312, which are provided for a first portable terminal 31 and a second portable terminal 32, respectively. A so-called global positioning system (GPS) mobile phone using the standard GPS can be used each for the position information acquisition units 311 and 312, or other landmarks may be used therefor. Alternatively, a combination of these may be used therefor, and means for the position information acquisition units 311 and 312 are not limited to the aforementioned. Moreover, a ticket transfer management system 33 is provided with a position information management system 334, in addition to the functions of the ticket transfer management system 13 shown in Fig. 1. The position information management system 334 has a function of recording and managing position information transmitted from the portable terminals 311 and 312.

Fig. 4 is a flowchart showing the flow of a process to transfer a ticket using the electronic-ticket transfer system according to the second embodiment, particularly showing an example of a process to transfer an electronic ticket using position information of a portable terminal. Description will be given below for an example of an actual process to transfer an electronic ticket, along with Fig. 4.

First, at step S41, a person with potential to seek to supply or demand tickets (a person with potential to seek to provide tickets and a person with potential to seek to acquire tickets) preliminarily registers information including whether the ticket transfer management system 33 should transmit ticket transfer recommend information to other portable terminals, and so on. Besides the information as to whether or not the information should be transmitted, the information to be registered contains the type of information permitted to be transmitted (e.g., sports, music, etc.) and the distance between a site of an event and a position of the portable terminal to permit to be transferred the information, and so on. After registration, the first portable terminal 31 transmits, for example in real time, position information acquired by the position information acquisition unit 311 to the position information management system 334, which in turn records the position information.

At step S42, a provider who is going to provide an electronic ticket (or a user who possesses the first portable terminal 31) accesses the ticket transfer management system 33 from the first portable terminal 31 to register information indicating that he or she seeks to transfer the ticket in a transfer information registration management system 331. The information to be registered contains information on the ticket to be transferred, his or her suggested price of the ticket to be transferred, information on his or her account into which the money for the ticket is to be paid, the deadline to conclude the transfer contract, and so on. There is no particular need for the provider to register the information on the ticket (e.g., the type of event, the date and time at which the ticket is available, etc.) if the information is obtained from information contained in the electronic ticket in itself, which is usually the case.

At step S43, the provider transmits an electronic ticket 35 to be actually transferred to a ticket management system 332 of the ticket transfer management system 33. The transmitted electronic ticket 35 is stored in a storage unit in the ticket management system 332. After transmission, the electronic ticket 35 in the first portable terminal 31 is automatically erased or invoked.

At step S44, the ticket transfer management system 33 transmits transfer recommend information on the ticket registered at steps S42 and S43 to a person who has been registered to seek to acquire the ticket at step S41 and who is actually present in the vicinity of the site at which the event is to be held.

In the second embodiment, the electronic ticket 35 is actually transferred to the second portable terminal 32, and the transfer recommend information is transmitted not only to the portable terminal 32 but also to other portable terminals which has been registered at step S41 and which matches registered conditions. If at step S41 a certain distance between a site of an event and a position of the portable terminal is registered as a condition for accepting the transfer recommend information, the transfer recommend information may be transmitted according to the distance.

For example, the second portable terminal 32 is registered so as to receive sports or movie ticket transfer recommend information when the distance to the site is not more than 5 km. When the distance to a stadium is 10 km and the distance to a movie theater is 2 km, the second portable terminal 32 receives movie ticket transfer information since the distance to the movie theater is short (or falls within a range of acceptable conditions), but the second portable terminal 32 does not receive soccer ticket transfer information since the distance to the stadium is long or falls outside the range of the acceptable conditions.

At step S45, if information on a desired electronic ticket is contained in the received transfer recommend information and the terms of transfer suit his or her want, the person to seek to supply or demand tickets performs the ticket acquisition reservation process in the ticket transfer management system 33. At step S46, the ticket acquirer performs the settlement process in a settlement system 333. To collect the money for the ticket, a credit card can be used, or a method in which a mobile phone company handles collection or the like may be employed. Immediately after completion of the settlement process at step S46, at step S47 the ticket transfer management system transmits to the portable terminal 32 the electronic ticket stored in the ticket management system. The portable terminal 32 stores the received electronic ticket in its storage unit, and the ticket becomes available. After the completion of the settlement process at step S46, at step S48 the ticket transfer management system 33 pays the money for the ticket into the provider's account for payment registered at steps S42. The use of position information of a portable terminal for providing transfer information, as mentioned above, enables proactive demand stimulation and efficient transfers.

Incidentally, the first portable terminal 31 does not necessarily require the position information acquisition unit. However, when the user of the first portable terminal 31 seeks to acquire an electronic ticket, the first portable terminal 31 needs to have the position information acquisition unit.

### INDUSTRIAL APPLICABILITY

The present invention is applicable for a novel electronic-ticket transfer system using a portable terminal.

## Claims

1. An electronic-ticket transfer system, comprising an electronic-ticket transfer management system that acts as an intermediary for transfer of an electronic ticket, and a portable terminal that provides communications involved in the transfer of the electronic ticket, **characterized in that** the electronic-ticket transfer management system comprises:
an electronic-ticket transfer information registration management unit that records the terms of transfer of the electronic ticket transmitted from an electronic-ticket provider's portable terminal; and
an electronic-ticket management unit that manages the electronic ticket transmitted from the electronic-ticket provider's portable terminal.

2. The electronic-ticket transfer system according to claim 1, **characterized in that** at least from the time that a portable terminal of a person who seeks to acquire the electronic ticket becomes accessible to the electronic-ticket transfer information registration management unit until completion of transfer to the electronic-ticket provider's portable terminal, the electronic-ticket management unit stores the electronic ticket.

3. The electronic-ticket transfer system according to claim 1, **characterized in that** at least from the time that the portable terminal of the person who seeks to acquire the electronic ticket becomes accessible to the electronic-ticket transfer information registration management unit until the electronic-ticket provider's portable terminal performs a procedure for canceling the transfer of the electronic ticket, the ticket management unit stores the electronic ticket.

4. The electronic-ticket transfer system according to any one of claims 1 to 3, **characterized by** further comprising a settlement unit that performs a settlement involved in the electronic ticket.

5. The electronic-ticket transfer system according to any one of claims 1 to 4, **characterized in that** the transfer information registration management unit manages, as the terms of transfer of the electronic ticket transmitted from the portable terminal of the person who seeks to acquire the electronic ticket, at least either information on the electronic ticket to be transferred, any one of the price of the ticket to be transferred, an account into which the money for the ticket is to be paid, or the deadline for the transfer.

6. An electronic-ticket transfer management system, connectable to a portable terminal that provides communications involved in transfer of an electronic ticket, which acts as an intermediary for the transfer of the electronic ticket, **characterized by** comprising:
an electronic-ticket transfer information registration management unit that records the terms of transfer of the electronic ticket transmitted from an electronic-ticket provider's portable terminal; and
an electronic-ticket management unit that manages the electronic ticket transmitted from the electronic-ticket provider's portable terminal, and
**characterized in that** at least from the time that a portable terminal of a person who seeks to acquire the electronic ticket becomes accessible to the transfer information registration management unit until completion of transfer to the electronic ticket provider's portable terminal, the electronic ticket management unit stores and manages the electronic ticket.

7. An electronic-ticket transfer system, comprising an electronic-ticket transfer management system that acts as an intermediary for transfer of an electronic ticket, and a portable terminal that provides communications involved in the transfer of the electronic ticket, **characterized in that** the electronic-ticket transfer management system comprises:
an electronic-ticket transfer information registration management unit that records the terms of transfer of the electronic ticket transmitted from an electronic-ticket provider's portable terminal;
an electronic-ticket management unit that manages the electronic ticket transmitted from the electronic-ticket provider's portable terminal; and
a position information management system that manages position information of the portable terminal.

8. The electronic-ticket transfer system according to claim 7, **characterized in that** the position information management system comprises a position information acquisition unit that acquires the present position information of the portable terminal connected via a network to the electronic-ticket transfer management system.

9. The electronic ticket transfer system according to claim 8, **characterized in that** information related to the electronic ticket is transmitted preferentially to a portable terminal of a person who seeks to acquire the electronic ticket and who is present in the vicinity of an event related to the electronic ticket, according to position information of the portable terminal of the person who seeks to acquire the electronic ticket, acquired by the position information acquisition unit.

10. An electronic-ticket transfer method for use in an electronic-ticket transfer management system that acts as an intermediary for transfer of an electronic ticket using a portable terminal, **characterized by** comprising the steps of:
registering the terms of transfer of the electronic ticket presented by an electronic-ticket provider's portable terminal; and
storing the electronic ticket transmitted from the electronic-ticket provider's portable terminal, and
**characterized in that** at least from the time that a portable terminal of a person who seeks to acquire the electronic ticket becomes accessible to the electronic-ticket transfer system until completion of transfer, the electronic-ticket transfer management system stores the electronic ticket.

11. An electronic-ticket transfer method for use in an electronic-ticket transfer management system that acts as an intermediary for transfer of an electronic ticket using a portable terminal, **characterized by** comprising the steps of:
registering the terms of transfer of the electronic ticket presented by an electronic-ticket provider's portable terminal;
storing the electronic ticket transmitted from the electronic-ticket provider's portable terminal;
acquiring the present position information of a portable terminal of a person who seeks to acquire the electronic ticket; and
transmitting information related to the electronic ticket, preferentially to the portable terminal of the person who seeks to acquire the electronic ticket, which is present in the vicinity of an event related to the electronic ticket, according to the acquired position information.

12. The electronic ticket transfer system according to any one of claims 10 and 11, **characterized by** comprising the step of storing the electronic ticket in the electronic-ticket management unit, at least from the time that the portable terminal of the person who seeks to acquire the electronic ticket becomes accessible to the electronic-ticket transfer information registration management unit until completion of transfer to the electronic-ticket provider's portable terminal.

13. The electronic-ticket transfer system according to any one of claims 10 and 11, **characterized by** comprising the step of storing the electronic ticket in the electronic-ticket management unit, at least from the time that the portable terminal of the person who seeks to acquire the electronic ticket becomes accessible to the electronic-ticket transfer information registration management unit until the electronic ticket provider's portable terminal performs a procedure for canceling the transfer of the electronic ticket.

14. A recording medium, which records a program to be run on a computer to execute the steps according to any one of claims 10 to 13.

15. A program, which is run on a computer to execute the steps according to any one of claims 10 to 13.
